# EUROPÄISCHE PATENTANMELDUNG

(11) **EP 2 228 239 A1**
(43) Veröffentlichungstag der Anmeldung: **15.09.2010**
(21) Anmeldenummer: 10005380.0
(22) Anmeldetag: 06.08.2009
(51) Int. Cl.: B60D 1/62, B62D 53/12, B60R 16/03

(54) **Adapter**

(30) Priorität: 03.11.2008 DE 102008054349
(62) Teilanmeldung aus: 09010150.2
(71) Anmelder: WABCO GmbH, 30453 Hannover (DE)
(72) Erfinder: Risse, Rainer, 30982 Pattensen-Reden (DE); Ronnenberg, Udo, 30900 Wedemark (DE); Stender Axel, 31787 Hameln (DE)

(57) **Zusammenfassung**

Die Erfindung betrifft einen Adapter (10) für den Anschluss einer Steuerungsanordnung für ein Anhängefahrzeug an ein Zugfahrzeug, wobei der Adapter (10) einen ersten Adapteranschluss (11) für den Anschluss eines Anschlusses der Steueranordnung, einen zweiten Adapteranschluss (12) gemäß der Norm ISO 7638 und einen dritten Adapteranschluss (13) gemäß der Norm ISO 12098 aufweist, wobei der Adapter derart eingerichtet ist, dass er den zweiten Adapteranschluss (12) und den dritten Adapteranschluss (13) auf den ersten Adapteranschluss (11) zusammenführt.

## Beschreibung

Die Erfindung betrifft einen Adapter für den Anschluss einer Steuerungsanordnung für ein Anhängefahrzeug an ein Zugfahrzeug.

Anhängefahrzeuge, die von einer Zugmaschine, insbesondere einer Kraftfahrzeug-Zugmaschine gezogen werden können, sind allgemein bekannt. Beispielsweise sind Sattelzüge bekannt, die durch eine Sattelzugmaschine und einen Sattelauflieger gebildet werden. Des Weiteren sind Anhängefahrzeuge bekannt, die ein Bremssystem und eine Lichtanlage aufweisen. Das Bremssystem hat den Zweck, das Bremsverhalten des Anhängefahrzeuges zu steuern. Die Lichtanlage ist für die Beleuchtung des Anhängefahrzeuges vorgesehen und umfasst in der Regel Beleuchtungselemente wie Bremslichter, Rückfahrscheinwerfer, Blinker, Warnlichter, Begrenzungsleuchten und Seitenmarkierungslichter. Um das Bremssystem und die Lichtanlage von einem Zugfahrzeug aus steuern und mit Strom versorgen zu können, besitzen Anhängefahrzeuge üblicherweise einen ersten Anschluss gemäß der Norm ISO 7638 und einen zweiten Anschluss gemäß der Norm ISO 12098.

Nachteilig an derartigen Anhängefahrzeugen ist der hohe Verkabelungs- und Installationsaufwand des Bremssystems und der Lichtanlage.

Eine Aufgabe der Erfindung ist es, einen Adapter für den Anschluss einer Steuerungsanordnung mit einem Bremssystem und einer Lichtanlage für ein Anhängefahrzeug an ein Zugfahrzeug zu schaffen.

Diese Aufgabe wird durch den Adapter nach Anspruch 1 gelöst.

Vorteilhafte Weiterbildungen sind Gegenstände der abhängigen Ansprüche.

Die Steuerungsanordnung für ein Anhängefahrzeug umfasst ein Bremssystem, eine Lichtanlage und einen Anschluss, wobei der Anschluss als gemeinsamer Anschluss für den gemeinsamen Anschluss des Bremssystems und der Lichtanlage an einem Zugfahrzeug ausgebildet ist.

Zum einen ermöglicht es der gemeinsame Anschluss, die Verkabelung zwischen einem Zugfahrzeug und dem Anhängefahrzeug zu reduzieren. Des weiteren ermöglicht ein gemeinsamer Anschluss, dass Versorgungsleitungen für die Stromversorgung des Bremssystems und der Lichtanlage und/oder Datenleitungen für die Übertragung von Daten zumindest teilweise zusammengeführt sind, anstatt derartige Leitungen jeweils getrennt für das Bremssystem und die Lichtanlage vorzusehen. Auf diese Weise ist es ebenfalls möglich, den Verkabelungs- und Installationsaufwand zu reduzieren.

Der erfindungsgemäße Adapter umfasst einen ersten Adapteranschluss für den Anschluss des Anschlusses der Steueranordnung, einen zweiten Adapteranschluss gemäß der Norm ISO 7638 und einen dritten Adapteranschluss gemäß der Norm ISO 12098, wobei der Adapter derart eingerichtet ist, dass er den zweiten Adapteranschluss und den dritten Adapteranschluss auf den ersten Adapteranschluss zusammenführt.

Der erfindungsgemäße Adapter ermöglicht es insbesondere, die Steueranordnung an Zugfahrzeuge anzuschließen, die keine Möglichkeit besitzen, den gemeinsamen Anschluss der Steueranordnung zu verwenden, aber für die Verbindung mit konventionellen Anschlüssen gemäß den Normen ISO 7638 und ISO 12098 eingerichtet sind.

Die Erfindung wird im Folgenden anhand von Ausführungsbeispielen, die durch mehrere Figuren dargestellt sind, näher beschrieben. Dabei zeigt:
- Fig. 1: eine schematische Ansicht eines Anhängefahrzeuges mit einer ersten Ausführungsform einer Steueranordnung,
- Fig. 2: ein Anhängefahrzeug mit einer zweiten Ausführungsform einer Steuerungsanordnung,
- Fig. 3: ein Anhängefahrzeug mit einer dritten Ausführungsform einer Steuerungsanordnung,
- Fig. 4: ein Anhängefahrzeug mit einer vierten Ausführungsform einer Steuerungsanordnung, und
- Fig. 5: eine Ausführungsform eines Adapters für den Anschluss einer der Steueranordnungen an ein Zugfahrzeug.

Gleiche oder einander entsprechende Bauteile sind in den Figuren mit denselben Bezugszeichen versehen.

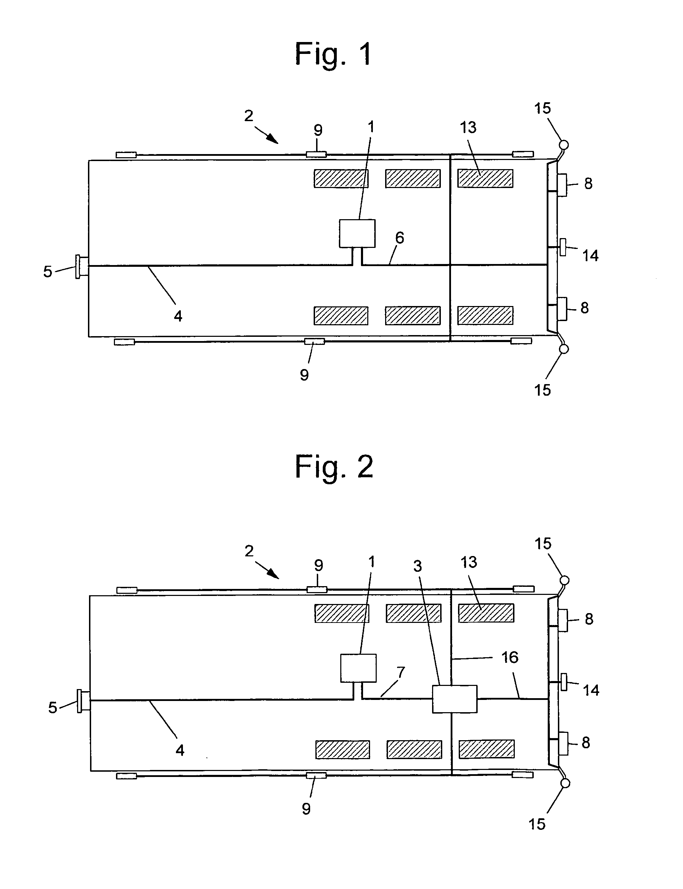

Die Fig. 1 zeigt schematisch ein Anhängefahrzeug mit einer ersten Ausführungsform einer Steuerungsanordnung. Das Anhängefahrzeug ist hier ein Sattelauflieger für eine Sattelzugmaschine. Das Anhängefahrzeug weist drei Hinterachsen auf, von denen allerdings lediglich rechts- und linksseitige Räder 13 symbolisch dargestellt sind.

Die Steuerungsanordnung umfasst ein Bremssystem und eine Lichtanlage 2. Das Bremssystem ist ein an sich bekanntes elektronisches Bremssystem. Vom Bremssystem lediglich dargestellt ist ein Bremsmodulator 1 mit einer integrierten Steuereinheit. Das Bremssystem ermöglicht die Steuerung des Bremsverhaltens des Anhängefahrzeuges über die Steuerung nicht näher dargestellter, den Rädern 13 zugeordneten Radbremsen. Die Lichtanlage 2 umfasst mehrere Beleuchtungselemente, hier zwei kombinierte Rücklichter 8, die jeweils ein Bremslicht, einen Rückfahrscheinwerfer, einen Blinker und ein Warnlicht umfassen, zwei Begrenzungsleuchten 15 und mehrere Seitenmarkierungslichter 9, sowie eine Kennzeichenbeleuchtung 14.

Des Weiteren umfasst die Steuerungsanordnung einen Anschluss 5, wobei der Anschluss 5 als gemeinsamer Anschluss für den gemeinsamen Anschluss des Bremssystems, hier des Bremsmodulators 1, und der Lichtanlage 2 an ein Zugfahrzeug ausgebildet ist. Der Anschluss 5 ist als Teil einer Steckverbindung ausgebildet, hier als Steckdose. Der gemeinsame Anschluss 5 ist über einen ersten Bus 4 mit dem Bremsmodulator 1 verbunden. Der Bus 4 umfasst mindestens 5 Leitungen, wobei zwei Leitungen Versorgungsleitungen für die Versorgung des Bremssystems 1 und der Lichtanlage 2 sind, eine Leitung eine Datenleitung für die Übertragung eines diskreten Signals zur Ansteuerung einer Warnlampe im Zugfahrzeug durch das EBS-System, und die restlichen zwei Leitungen Datenbus-Leitungen für einen Can-Bus ("Controller Area Network"), CAN-HIGH und CAN-LOW, sind. Der Anschluss 5 weist fünf Anschlusselemente (nicht gezeigt) auf, wobei jeweils ein Anschlusselement einer Leitung zugeordnet ist. Der Bremsmodulator 1 weist für den Anschluss des ersten Bus 4 eine geeignete Schnittstelle auf.

Die Lichtanlage 2 ist mit dem Anschluss 5 mittelbar über das Bremssystem, hier den Bremsmodulator 1, verbunden. Die Lichtanlage 2 ist mit dem Bremssystem 1 über einen zweiten Bus 6 verbunden. Der zweite Bus 6 weist zwei Versorgungsleitungen für die elektrische Stromversorgung und eine Datenleitung für einen LIN-Bus auf ("Local Interconnect Network"). Die Beleuchtungselemente 8, 9, 14, 15 weisen geeignete LIN-Schnittstellen auf, mittels denen die Beleuchtungselemente 8, 9, 14, 15 an den Bus 6 angeschlossen sind. Der Bremsmodulator 1 ist ebenfalls über eine LIN-Schnittstelle an den zweiten Bus 6 angeschlossen.

In diesem Ausführungsbeispiel erfolgt die Steuerung der Lichtanlage 2 mittelbar über die in den Bremsmodulator 1 integrierte Steuereinheit. Über den ersten Bus 4 von dem Bremsmodulator 1 erhaltene Daten für die Steuerung der Lichtanlage 2, beispielsweise die Aktivierung eines Blinkers oder der Warnlichter, wird von der Steuereinheit des Bremsmodulators 1 in ein Datenformat konvertiert, das über den zweiten Bus 6 an das den Daten zugeordnete Beleuchtungselement übertragen wird. Ein derartiger Aufbau hat den Vorteil, dass für die Steuerung der Lichtanlage 2 ein vom ersten Bus 4 unterschiedliches Bussystem verwendet werden kann, hier der zweite Bus 6. Des weiteren stehen dem Bremssystem Statusinformationen über den Zustand der Lichtanlage 2, beispielsweise die Aktivierung eines Blinkers, zur Verfügung. Diese Statusinformationen können beispielsweise für die Steuerung des Bremsverhaltens des Anhängefahrzeuges mit verwendet werden.

Die Fig. 2 zeigt ein Anhängefahrzeug mit einer zweiten Ausführungsform einer Steuerungsanordnung. Die zweite Steuerungsanordnung entspricht in wesentlichen Teilen der ersten Ausführungsform, weswegen im Folgenden lediglich auf Unterschiede eingegangen wird.

Im Gegensatz zur ersten Ausführungsform weist die Lichtanlage 2 eine Steuereinrichtung 3 zur Steuerung der Lichtanlage 2 auf. Die Steuereinrichtung 3 wird hier durch ein elektronisches Steuergerät 3 gebildet. Die Beleuchtungselemente 8, 9, 14, 15 sind mit dem Steuergerät 3 über einen dritten Bus 16 verbunden. Der dritte Bus 16 umfasst zwei Versorgungsleitungen und eine Datenleitung entsprechend dem zweiten Bus 6. Alternativ ist es möglich, die Beleuchtungselemente zumindest teilweise über Einzelverdrahtungen an das Steuergerät 3 anzuschließen. Ein zweiter Bus 7 verbindet den Bremsmodulator 1 mit dem Steuergerät 3. Der zweite Bus 7 ist hier als EBS-Bus ausgebildet.

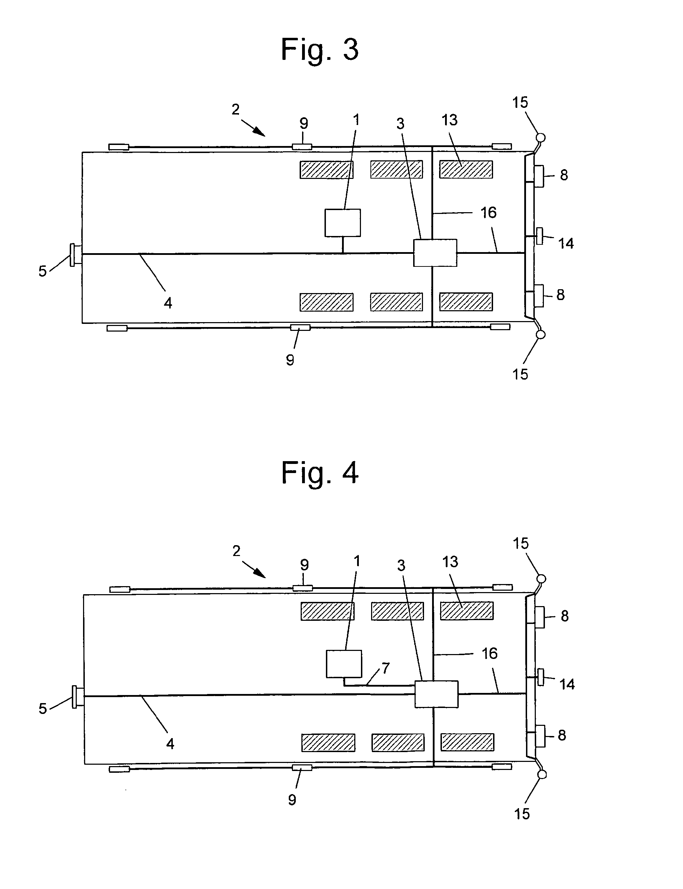

Die Fig. 3 zeigt ein Anhängefahrzeug mit einer dritten Ausführungsform einer Steuerungsanordnung. Diese dritte Steuerungsanordnung entspricht in wesentlichen Teilen der ersten Ausführungsform, weswegen im Folgenden lediglich auf die Unterschiede eingegangen wird.

Im Gegensatz zur zweiten Ausführungsform ist sowohl der Bremsmodulator 1 als auch das Steuergerät 3 an dem ersten Datenbus 4 angeschlossen. Die Lichtanlage 2 ist auf diese Weise direkt mit dem Anschluss 5 verbunden, und nicht mittelbar über den Bremsmodulator 1, wie im Falle der zweiten Steuerungsanordnung. Die Steuerung der Lichtanlage 2 sowie deren Energieversorgung kann damit grundsätzlich ohne Beteiligung des Bremssystems 1 erfolgen. Ein Eingriff des Bremssystems 1 in die Steuerung der Lichtanlage 2 oder die Übertragung von Status-Informationen der Lichtanlage 2 an das Bremssystem 1 bleiben aber wegen der Verbindung von Bremssystem 1 und Steuereinrichtung 3 über den ersten Bus 4 möglich.

Die Fig. 4 zeigt ein Anhängefahrzeug mit einer vierten Ausführungsform einer Steuerungsanordnung. Die vierte Steuerungsanordnung entspricht in wesentlichen Teilen der zweiten Steuerungsanordnung, weswegen im Folgenden lediglich auf Unterschiede eingegangen wird.

Im Gegensatz zur zweiten Ausführungsform verbindet der erste Bus 4 den gemeinsamen Anschluss 5 direkt mit der Steuereinrichtung 3 der Lichtanlage 2. Das Bremssystem ist nicht direkt mit dem Anschluss 5 verbunden, sondern mittelbar über den zweiten Bus 7, hier ein EBS-Bus, der die Steuereinrichtung 3 mit dem Bremsmodulator 1 verbindet. Die Steuereinrichtung 3 ist entsprechend eingerichtet, um für das Bremssystem 1 bestimmte Daten geeignet zu konvertieren und an das Bremssystem 1 zu übertragen, sowie das Bremssystem 1 mit Energie zu versorgen.

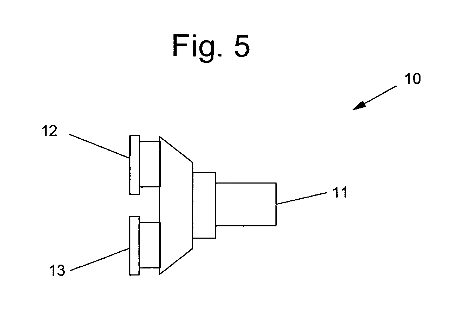

Die Fig. 5 zeigt einen Adapter 10 für den Anschluss einer Steuerungsanordnung an ein Zugfahrzeug. Der Adapter 10 umfasst einen ersten Adapteranschluss 11 für den Anschluss des Anschlusses 5 der Steuerungsanordnung, einen zweiten Adapteranschluss 12 gemäß der Norm ISO 7638 und einen dritten Adapteranschluss 13 gemäß der Norm ISO 12098. Der Adapter ist derart eingerichtet, dass er den zweiten Adapteranschluss 12 und den dritten Adapteranschluss 13 auf den ersten Adapteranschluss 11 zusammenführt.

In diesem Ausführungsbeispiel ist der Adapter derart ausgebildet, dass er Anschlusselemente des zweiten und dritten Adapteranschlusses 12, 13, die normgemäß entweder mit Versorgungsleitungen oder Datenleitungen belegt sind, zu zwei Versorgungsleitungen, eine Datenleitung für das Warnlicht und zwei Datenleitungen als Datenbus-Leitungen CAN-HIGH bzw. CAN-LOW zusammenfasst. Der Adapter 10 weist zu diesem Zweck eine elektronische Steuereinheit auf, die über die Adapteranschlüsse 12, 13 eingehende diskrete Schaltsignale, beispielsweise die Aktivierung oder Deaktivierung eines Blinkers oder eines Rückscheinwerfers, in busfähige Daten konvertiert, die über die beiden CAN-Datenbusleitungen des ersten Adapteranschlusses 11 übertragen werden können. Des Weiteren generiert die elektronische Steuereinheit des Adapters 10 eine Lastsimulation an den jeweiligen Anschlusselementen des zweiten und dritten Adapteranschlusses 12, 13, falls erforderlich. Die Anschlusselemente des zweiten Adapteranschlusses 12 und des dritten Adapteranschlusses 13, die von einem CAN-Bus belegt sind, werden ebenfalls auf die mit einem CAN-Bus belegten Anschlusselemente des ersten Adapteranschlusses zusammengeführt. Zudem ist die elektronische Steuereinheit des Adapters 10 derart eingerichtet, dass über die Busleitungen am ersten Anschlusselement 11 eingehende Daten entsprechend ihrer Zuordnung zum Bremssystem oder zur Lichtanlage zur Weiterleitung über den zweiten Adapteranschluss 12 oder den dritten Adapteranschluss 13 aufgesplittet werden.

In einer alternativen Ausführungsform weist der Anschluss 5 und der Bus 4 für die Übertragung von Daten zwischen Zugfahrzeug und Bremssystem 1 bzw. Lichtanlage 2 getrennte Anschlusselemente bzw. Datenbus-Leitungen auf. Der Adapter 10 ordnet dementsprechend für das Bremssystem bestimmte Daten oder Signale den Anschlusselementen des ersten Adapteranschlusses 11 zu, die mit den Datenbus-Leitungen für das Bremssystem belegt sind, und für die Lichtanlage 2 bestimmte Daten oder Signale den Anschlusselementen des ersten Adapteranschlusses 11 zu, die mit den Datenbus-Leitungen für die Lichtanlage belegt sind.

## Patentansprüche

1. Adapter (10) für den Anschluss einer Steuerungsanordnung für ein Anhängefahrzeug an ein Zugfahrzeug, wobei der Adapter (10) einen ersten Adapteranschluss (11) für den Anschluss eines Anschlusses (5) der Steueranordnung, einen zweiten Adapteranschluss (12) gemäß der Norm ISO 7638 und einen dritten Adapteranschluss (13) gemäß der Norm ISO 12098 aufweist, wobei der Adapter derart eingerichtet ist, dass er den zweiten Adapteranschluss (12) und den dritten Adapteranschluss (13) auf den ersten Adapteranschluss (11) zusammenführt.

2. Adapter nach Anspruch 1, wobei der Adapter derart eingerichtet ist, dass dieser über den zweiten Adapteranschluss (12) und/oder dritten Adapteranschluss (13) empfangene diskrete Schaltsignale zumindest teilweise in ein Datenbus-Signal konvertiert, das über den ersten Adapteranschluss (11) übertragbar ist.

3. Adapter nach einem der Ansprüche 1 oder 2, wobei der Adapter derart eingerichtet ist, dass dieser Anschlusselemente des zweiten Adapteranschlusses (12) und/oder dritten Adapteranschlusses (13) für den Anschluss mindestens einer Datenbus-Leitung auf mindestens ein Anschlusselement des ersten Adapteranschlusses (11) für den Anschluss einer Datenbus-Leitung zusammenführt.
